# FASCICULE DE BREVET EUROPEEN

(11) **EP 3 829 919 B1**
(45) Date de publication et mention de la délivrance du brevet: **26.07.2023**
(21) Numéro de dépôt: 19742392.4
(22) Date de dépôt: 26.07.2019
(51) Int. Cl.: B60L 5/38, B60L 5/39, B60L 5/08

(54) **DISPOSITIF DE CAPTAGE DE COURANT ÉLECTRIQUE POUR UN VÉHICULE FERROVIAIRE**
VORRICHTUNG ZUR ERFASSUNG EINES ELEKTRISCHEN STROMES FÜR EIN SCHIENENFAHRZEUG
DEVICE FOR CAPTURING AN ELECTRIC CURRENT FOR A RAIL VEHICLE

(30) Priorité: 27.07.2018 FR 1857034
(43) Date de publication de la demande: 09.06.2021
(73) Titulaire: Mersen France SB SAS, 69720 Saint-Bonnet-de-Mure (FR)
(72) Inventeur: CANOLLE, Florent, 69008 LYON (FR); DOSDA, Olivier, 38460 CREMIEU (FR)
(74) Mandataire: Lavoix
(86) Numéro de dépôt international: PCT/EP2019/070179
(87) Numéro de publication internationale: WO 2020/021065

(56) Documents cités:
- EP-A1- 3 354 510
- EP-A2- 1 975 584
- WO-A1-2018/086689
- CN-A- 106 965 681
- CN-A- 108 489 652
- CN-A- 108 489 652
- GB-A- 2 315 722
- JP-A- H11 194 059
- DATABASE WPI Week 201608 Thomson Scientific, London, GB; AN 2016-037594 XP002795017, & CN 105 222 701 A (UNIV GUILIN ELECTRONIC TECHNOLOGY) 6 janvier 2016 (2016-01-06)
- GREGORY O J ET AL: "Ceramic strain gages for propulsion health monitoring", DIGITAL AVIONICS SYSTEMS CONFERENCES, 2000. PROCEEDINGS. DASC. THE 19T H 7-13 OCTOBER 2000, PISCATAWAY, NJ, USA,IEEE, vol. 2, 7 octobre 2000 (2000-10-07), pages 6.E.2_1-6.E.2_8, XP010522773, ISBN: 978-0-7803-6395-3

## Description

La présente invention concerne un dispositif de captage de courant électrique pour un véhicule ferroviaire. Des aspects de l'invention concernent également un véhicule ferroviaire comportant ce dispositif de captage.

On connaît des véhicules ferroviaires à traction électrique adaptés pour être alimentés électriquement grâce à un dispositif d'alimentation externe, tel qu'un troisième rail longeant la voie sur laquelle le véhicule circule. De tels véhicules comportent généralement un dispositif de captage pour collecter un courant électrique depuis ce rail d'alimentation.

Le dispositif de captage comporte un patin qui vient en contact avec le rail et qui est connecté à une armature par l'intermédiaire d'un bras. Typiquement, le bras est électriquement conducteur et permet d'acheminer le courant électrique prélevé par le patin.

CN106965681 A divulgue un tel dispositif de captage de courant pour véhicule ferroviaire. Le document CN 105222701 A décrit une jauge de contrainte comportant une structure multicouche (dont une couche céramique) permettant une résistance à la corrosion. EP 3354510 A1 divulgue un dispositif de captage de courant comportant un appareil pour mesurer les efforts mécaniques exercés sur un bras du dispositif.

Un inconvénient de ces dispositifs de captage est que le bras est susceptible de se déformer (ou de se casser) lorsque le véhicule circule, par exemple à cause d'une collision avec un obstacle sur la voie. Lorsque le bras est électriquement conducteur, une telle déformation (ou cassure) peut entraîner un risque de court-circuit ou de déraillement si le véhicule n'est pas arrêté à temps.

Il existe donc un besoin pour dispositif de captage de courant pour un véhicule ferroviaire qui remédie à ces inconvénients.

A cet effet, l'invention concerne un dispositif de captage de courant électrique pour un véhicule ferroviaire, le dispositif de captage comportant :
- un patin destiné à venir en contact avec un rail d'alimentation électrique ;
- une armature;
- un bras électriquement conducteur qui relie mécaniquement et électriquement l'armature au patin, le bras comportant une partie centrale reliant l'armature à une portion de support sur laquelle est monté le patin.

Le dispositif de captage comporte un appareil pour mesurer les efforts mécaniques exercés sur le bras, l'appareil de mesure comportant des capteurs de déformation intégrés à l'intérieur d'une structure d'isolement électrique pour les isoler électriquement du bras, la structure d'isolement comportant une couche de colle déposée sur une surface de réception et une couche de céramique surmontant la couche de colle, les capteurs de déformation étant déposés sur la couche de céramique.

L'appareil de mesure permet de mesurer en temps réel les efforts mécaniques subis par le bras. La structure d'isolement permet aux capteurs de déformation d'être électriquement isolés du bras.

L'appareil de mesure permet donc une mesure fiable, puisque les capteurs sont placés au plus près du bras, sans pour autant accroître le risque de fuite du courant électrique collecté depuis le bras vers l'appareil de mesure.

La structure d'isolement évite d'avoir recours à un circuit d'isolation galvanique, ce qui est avantageux car l'ajout d'un tel circuit d'isolation galvanique renchérirait le coût et la complexité du dispositif de captage.

Selon des aspects avantageux mais non obligatoires de l'invention, ce dispositif de captage peut incorporer une ou plusieurs des caractéristiques suivantes prises isolément ou suivant toute combinaison techniquement admissible :
- L'appareil de mesure est monté sur une face supérieure de la partie centrale du bras.
- L'appareil de mesure est monté sur une face latérale de la partie centrale du bras.
- L'appareil de mesure comporte deux groupes de capteurs de déformation, chaque groupe de capteurs étant associé à un circuit de mesure, les deux groupes de capteurs étant montés sur la même face de la partie centrale et placés à des distances différentes de l'armature.
- L'armature comporte un support de bras, la partie centrale du bras comportant un orifice de réception d'un pion de centrage monté sur un support de bras, le bras comportant en outre une rondelle au moins partiellement reçue dans l'orifice en étant montée autour du pion de centrage et en compression entre la partie centrale du bras et le support de bras, de sorte que le bras repose sur le support de bras par l'intermédiaire de la rondelle, l'appareil de mesure étant monté sur une surface de réception extérieure de la rondelle.
- L'appareil de mesure comporte également un capteur de température placé au voisinage d'au moins un des capteurs de déformation.
- La structure d'isolement comporte en outre une couche d'encapsulation en résine ou en vernis qui recouvre les capteurs de déformation.
- L'épaisseur de la couche de colle est comprise entre 10µm et 1mm.
- L'épaisseur de la couche de céramique est comprise entre 0,05mm et 3mm.

Selon un autre aspect, l'invention concerne un système de captage de courant pour un véhicule ferroviaire, caractérisé en ce que le système comporte un dispositif de captage de courant électrique tel que décrit précédemment et une unité de traitement connectée à l'appareil de mesure et programmée pour détecter une rupture du bras et/ou pour calculer une force de contact entre le patin et un rail d'alimentation électrique à partir des mesures de déformation issues de l'appareil de mesure.

L'invention sera mieux comprise et d'autres avantages de celle-ci apparaîtront plus clairement à la lumière de la description qui va suivre, d'un mode de réalisation d'un dispositif de captage du courant électrique donné uniquement à titre d'exemple et faite en référence aux dessins annexés dans lesquels :
- la figure 1 représente schématiquement un dispositif de captage du courant électrique pour un véhicule ferroviaire selon des modes de réalisation de l'invention ;
- la figure 2 représente schématiquement une partie du dispositif de captage du courant de la figure 1 selon un premier mode de réalisation ;
- la figure 3 représente schématiquement une partie du dispositif de captage du courant de la figure 1 selon un deuxième mode de réalisation ;
- la figure 4 représente schématiquement, selon une vue en coupe, un appareil de mesure équipant le dispositif de captage du courant de la figure 1 ;
- la figure 5 représente schématiquement une partie du dispositif de captage du courant de la figure 1 selon un troisième mode de réalisation ;
- la figure 6 représente schématiquement une vue inférieure de la partie du dispositif de captage de la figure 2 ;
- la figure 7 est un schéma synoptique d'un système instrumenté équipant un véhicule ferroviaire et comportant le dispositif de captage du courant de la figure 1.

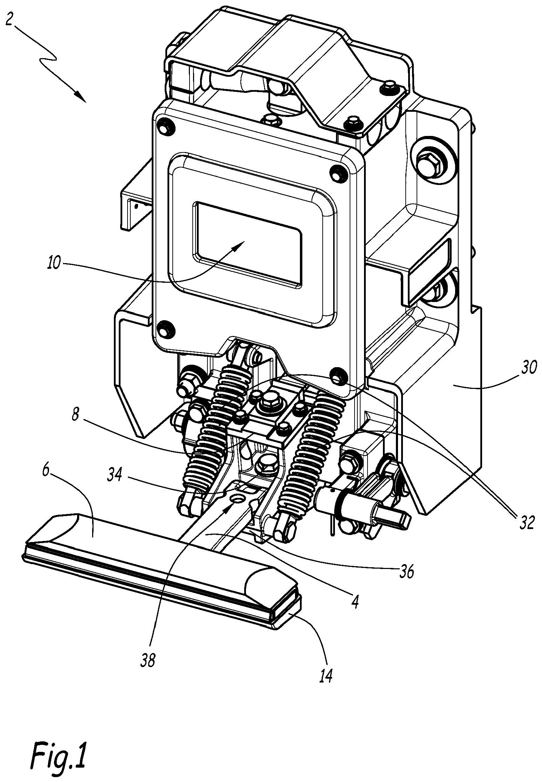

La figure 1 représente un dispositif 2 de captage du courant électrique pour un véhicule ferroviaire. Le dispositif 2 est apte à coopérer avec un rail d'alimentation électrique, pour collecter un courant électrique depuis le rail d'alimentation électrique. Le dispositif 2 permet ensuite d'acheminer le courant collecté à destination d'un circuit d'alimentation électrique à bord du véhicule ferroviaire, par exemple pour alimenter une chaîne de traction électrique du véhicule ferroviaire.

Selon des exemples, le rail d'alimentation est un troisième rail disposé le long de la voie ferrée sur laquelle le véhicule ferroviaire circule.

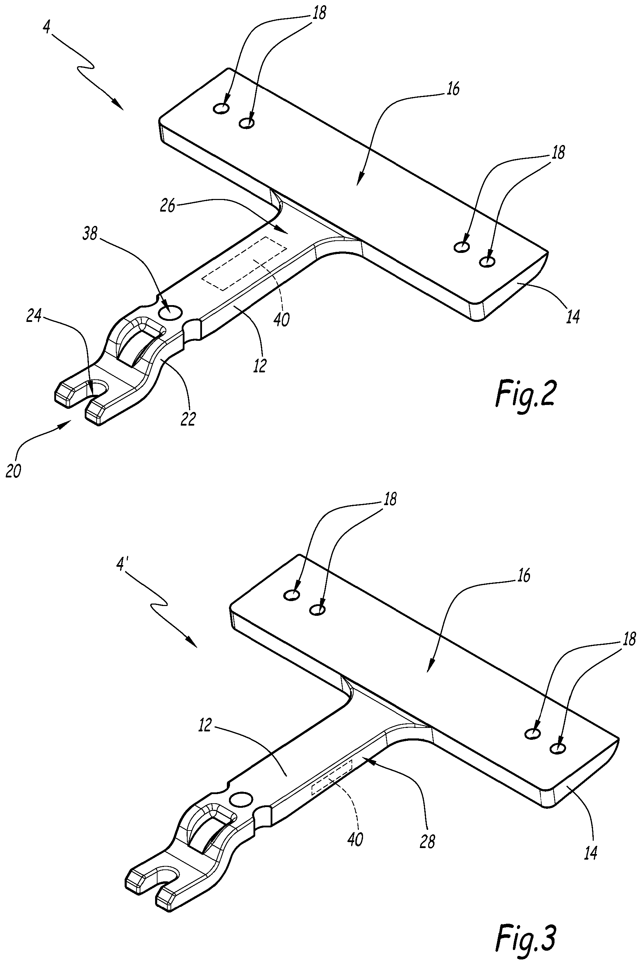

Comme illustré sur les figures 1 et 2, le dispositif 2 comporte un bras 4, un patin de collecte 6 et une armature 8 formant un support du bras 4.

Le patin 6 est destiné à venir en contact direct avec le rail d'alimentation électrique pour prélever un courant électrique depuis le rail d'alimentation électrique lorsque ce dernier est alimenté électriquement.

Le patin 6 est réalisé en matériau électriquement conducteur, de préférence en carbone ou dans un matériau carboné.

Dans l'exemple illustré, le patin 6 présente une forme de pavé allongé avec une base en forme de quadrilatère, bien qu'en variante la géométrie du patin 6 puisse être adaptée en fonction de la disposition du rail d'alimentation.

Le bras 4 relie le patin 6 à l'armature 8, à la fois mécaniquement et électriquement. De préférence, le bras 4 est rigide.

Le bras 4 est réalisé en un matériau électriquement conducteur, tel qu'un métal, par exemple du cuivre ou de l'aluminium, ou un alliage métallique, tel qu'un alliage de cupro-aluminium, ou de la fonte, ou un alliage carboné. Le bras 4 permet d'acheminer le courant électrique collecté par le patin 6.

La figure 2 représente un exemple du bras 4 vu selon une vue de dessus en perspective isométrique.

Selon des modes de mise en oeuvre, le bras 4 comporte une partie principale 12 centrale et une partie 14 de support du patin 6.

Par exemple, la partie principale 12, ou partie centrale, comporte un barreau essentiellement rectiligne qui présente ici une section transverse de forme rectangulaire.

La partie principale 12 présente notamment une face supérieure 26, une face inférieure et des faces latérales 28. Par exemple, la face 26 est horizontale et les faces latérales 28 sont verticales lorsque le dispositif 2 est dans une configuration montée.

En variante, la partie centrale 12 peut être de forme différente. Par exemple, le barreau peut avoir une section circulaire ou une section en forme de trapèze. La partie centrale 12 peut aussi présenter une forme de plaque.

La partie 14 comporte ici un plateau comprenant une face 16 de contact avec le patin 6 et des orifices 18 pour recevoir des organes de fixation du patin 6. Le patin 6 est fixé sur la face 16 et est en contact avec la face 16. De préférence, les parties 12 et 14 sont formées d'un seul tenant.

La partie 14 est formée à une extrémité distale de la partie principale 12. La face 16, de même que la partie 14, sont essentiellement planes et s'allongent ici perpendiculairement à la partie principale 12, par exemple horizontalement. La forme et l'agencement de la partie 14 dépendent de la disposition du rail d'alimentation.

En pratique, le rail d'alimentation extérieur s'étend parallèlement à un axe longitudinal du véhicule ferroviaire sur lequel le dispositif 2 est monté, de sorte que le patin 6 et la face 16 sont alors alignés avec le rail d'alimentation et la partie principale 12 s'étend perpendiculairement en saillie par rapport à une des faces latérales du véhicule.

Dans l'exemple illustré, lorsque le dispositif 2 est monté sur le véhicule ferroviaire, la face 16 est tournée vers le haut, pour permettre au patin 6 d'entrer en contact avec une face inférieure du rail d'alimentation, par exemple dans le cas d'un mode de captage par le dessus du rail d'alimentation.

Selon des variantes non illustrées, la face 16 est tournée vers le bas, ce qui permet au patin 6 d'entrer en contact avec une face supérieure du rail d'alimentation, par exemple dans le cas d'un mode de captage par le dessus du rail d'alimentation.

La partie principale 12 comporte aussi une extrémité proximale 20 par laquelle le bras 4 est attaché ou ancré à l'armature 8. Par exemple, l'extrémité 20 comporte un orifice 24 destiné à recevoir un élément de fixation 34, tel qu'une vis ou une tige filetée, pour fixer et serrer le bras 4 sur l'armature 8. Sur la figure 1, seule la tête de l'élément de fixation 34 est visible.

Selon des exemples, la partie centrale 12 peut comporter une portion coudée 22 à proximité de l'extrémité proximale 20.

Sur la figure 1, la référence 36 désigne un support de bras appartenant à l'armature 8, ici en forme de barre. Le support de bras 36 est situé sous le bras 4 et permet au bras 4 de reposer sur le support 36.

Selon des modes de mise en oeuvre, le support de bras 36 comporte un pion de centrage, par exemple s'étendant en saillie depuis une face supérieure du support de bras 36 en étant venu de matière avec le support de bras 36. Le bras 4 comporte avantageusement un orifice 38 de réception dans lequel le pion de centrage est reçu lorsque le bras 4 est en configuration montée. L'orifice 38 est ici formé sur la partie centrale 12, par exemple vers l'extrémité 20. Le pion de centrage permet d'éviter un décalage ou un décentrage accidentel du bras 4.

Le dispositif 2 comporte également un circuit électrique 10 qui collecte le courant prélevé, et un boîtier de protection 30, ou semelle de protection, qui entoure au moins partiellement l'armature 8 et le circuit 10.

Par exemple, le boîtier 30 est réalisé en matériau électriquement isolant.

Par exemple, le circuit 10 comporte un ou plusieurs terminaux de raccordement connectés à un circuit d'alimentation électrique embarqué dans le véhicule ferroviaire.

On comprend donc que le patin 6 est connecté électriquement au circuit 10 par l'intermédiaire du bras 4. Par exemple, l'armature 8 est électriquement conductrice et raccorde l'extrémité 20 du bras 4 au circuit 10. Selon un exemple, le circuit 10 comporte un équipement de protection électrique tel qu'un fusible.

En effet, dans certaines applications, l'utilisation d'un bras 4 conducteur est préférable à l'utilisation d'un bras isolant, car le bras isolant requiert en plus l'ajout d'un conducteur dédié, tel qu'un câble ou une barre de raccordement de type busbar, pour raccorder électriquement le patin.

Selon des exemples optionnels et illustratifs, l'armature 8 est partagée entre une partie mobile solidaire du bras 4 et une partie fixe, par exemple solidaire du boîtier 30. La partie mobile est libre de se déplacer par rapport à la partie fixe, ici par pivotement autour d'un axe horizontal parallèle à la direction longitudinale de la partie 14. Un ou plusieurs ressorts 32, tels que des ressorts hélicoïdaux à traction, s'étendent entre les parties fixe et mobile de l'armature 8 pour ramener la partie mobile dans une position en contact avec le rail d'alimentation. Cela permet au dispositif 2 de tolérer d'éventuelles variations de hauteur du rail d'alimentation par rapport à la voie ferrée et d'exercer un effort sur le rail permettant d'assurer une bonne qualité de captation du courant. Le ou les ressorts 32 peuvent, dans une variante non illustrée, être remplacés par des ressorts à torsion montés autour de la liaison pivot.

En pratique, dans une configuration d'utilisation, le dispositif 2 est monté sur un véhicule ferroviaire, par exemple en attachant le boîtier de protection sur une partie inférieure du véhicule ferroviaire, de préférence sur un bogie ou sur un bas de caisse du véhicule ferroviaire. Un même véhicule ferroviaire peut comporter plusieurs dispositifs 2 connectés au circuit d'alimentation électrique du véhicule.

Le dispositif 2 comporte un appareil de mesure 40 pour mesurer les efforts mécaniques exercés sur le bras 4. L'appareil de mesure 40 comporte des capteurs de déformation qui sont en contact avec le bras 4.

Par exemple, les capteurs de déformation sont des jauges de déformation, aussi nommées jauges de contrainte.

Selon un exemple illustratif, chaque jauge de déformation comporte une ou plusieurs couches minces d'un matériau électriquement conducteur, de préférence un matériau métallique.

Lorsque la jauge est soumise à une déformation, par exemple parce que la surface sur laquelle elle est déposée se déforme, les propriétés électriques de la jauge sont modifiées, ce qui permet de quantifier la déformation de la jauge en mesurant les variations d'un courant électrique traversant la jauge.

De préférence, les capteurs de déformation permettent, lorsqu'ils sont en contact avec le bras du dispositif 2, de mesurer un effort subi par le bras supérieur ou égal à 50N ou supérieur ou égal à 100N et inférieur ou égal à 5000N ou inférieur ou égal à 3000N.

Cette plage de valeurs permet aux capteurs de déformation de mesurer une déformation (typiquement inférieure à 1000N) du bras et également de détecter une cassure du bras (effort à la rupture supérieur à 1000N).

Par exemple, la tolérance de mesure de l'appareil de mesure 40 pour l'intervalle de valeurs d'efforts supérieur à 1000N est plus élevée que la tolérance de mesure pour l'intervalle de valeurs d'efforts inférieur à 1000N. Pour ce dernier intervalle, la tolérance de mesure est de préférence inférieure à 5% ou inférieure à 2%.

Selon des modes de réalisation, l'appareil de mesure 40 est monté sur le bras 4, de préférence sur la partie centrale 12.

Dans l'exemple illustré, l'appareil 40 est monté sur la face supérieure 26 de la partie centrale 12, qui alors dite former une « surface de réception » pour les capteurs de déformation. Les capteurs de déformation sont alors en contact avec la face supérieure 26.

Par exemple, dans la présente description, l'appareil de mesure 40 est dit être « monté » sur une surface lorsque les capteurs de déformations de l'appareil 40 sont montés sur cette surface, c'est-à-dire qu'ils sont fixés, directement ou indirectement, à cette surface.

Selon d'autres modes de réalisation, l'appareil 40 est monté sur une des faces latérales 28 de la partie centrale 12, qui alors dite former une surface de réception pour les capteurs de déformation. Les capteurs de déformation sont alors en contact avec ladite face latérale 28.

Par exemple, la figure 3 représente un bras 4' selon un autre mode de réalisation. Le bras 4' est analogue au bras 4 excepté que l'appareil de mesure 40 est désormais fixé sur une face latérale 28 de la partie centrale 12 du bras 4'.

Mis à part cette différence, le bras 4' est semblable au bras 4 et tout ce qui est décrit en référence au bras 4 peut être transposé au bras 4', de sorte que seul le bras 4 est décrit dans ce qui suit.

Par exemple, placer l'appareil de mesure 40 sur la face supérieure 26 permet de mesurer plus précisément la composante verticale des efforts en flexion exercés sur le bras 4, tandis que placer l'appareil de mesure 40 sur la face supérieure 26 permet de mesurer plus précisément les efforts latéraux en flexion subis par le bras 4'.

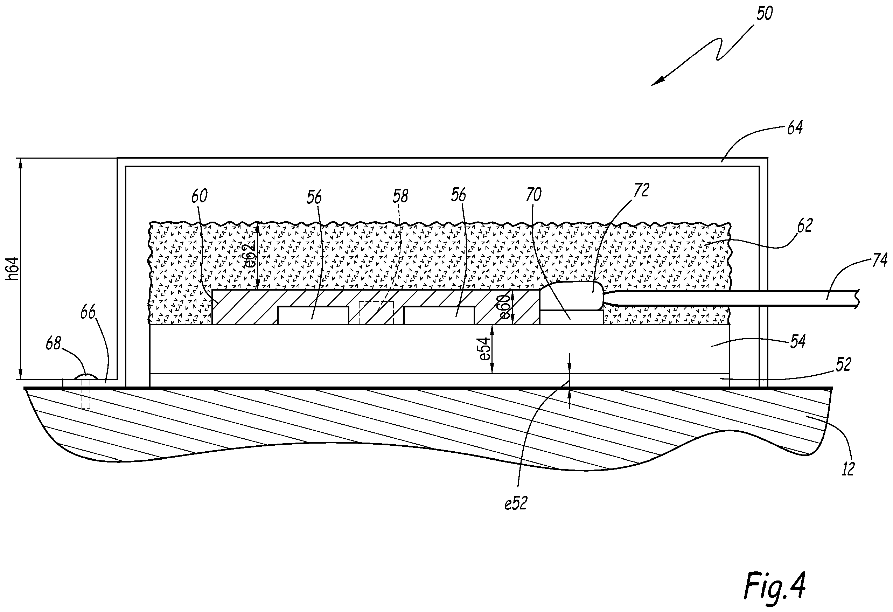

L'appareil de mesure 40 comporte au moins une unité de mesure 50 dont un exemple est illustré sur la figure 4. Les capteurs de déformation sont compris dans une ou plusieurs unités de mesure 50.

Dans cet exemple, l'appareil de mesure 40 comporte une seule unité de mesure 50.

L'unité de mesure 50 comporte une structure d'isolement électrique comportant une couche de colle 52 et une couche de céramique 54 surmontant la couche de colle 52.

La couche de colle 52 est déposée sur la surface de réception du bras 4, par exemple sur la face supérieure 26 ou sur une des faces latérales 28, selon les cas. Par exemple, la couche céramique 54 est en contact direct avec la couche de colle 52.

Selon des exemples, la colle de la couche 52 est un adhésif de préférence thermodurcissable, tel qu'une résine époxyde.

Les capteurs de déformation, qui portent ici la référence « 56 », sont déposés sur la couche de céramique 54 et sont en contact indirect avec le bras 4.

Dans les exemples décrits, les couches de la structure d'isolement sont planes et d'épaisseur essentiellement constante (c'est-à-dire d'épaisseur constante à 10% près ou de préférence à 5% près), sauf précision contraire.

De préférence, tout ou partie des capteurs de déformation 56 sont connectés entre eux au sein d'un circuit de mesure, tel qu'un pont de Wheatstone.

Par exemple, l'unité de mesure 50 comporte quatre capteurs 56 (dont seulement deux sont visibles sur la figure 4) connectés entre eux pour former un circuit de mesure.

En variante, le nombre de capteurs 56 peut être différent.

De façon avantageuse, les capteurs 56 sont connectés au sein de chaque circuit de mesure par des pistes électriquement conductrices, par exemple des pistes métalliques, qui sont déposées sur la couche de céramique 54, par exemple de façon semblable aux pistes conductrices d'un circuit imprimé.

Selon des variantes, plusieurs circuits de mesure sont utilisés dans l'appareil de mesure 40. Chaque circuit de mesure comporte un groupe incluant plusieurs capteurs 56. Dans ce cas, les groupes de capteurs 56 sont de préférence en contact avec la même face de la partie centrale 12 et sont espacés entre eux en étant placé à des distances différentes de l'armature 8 à laquelle le bras 4 est connecté.

Par exemple, deux circuits de mesure sont alignés le long de la partie centrale 12, le premier groupe de capteurs 56 étant placé à une distance D1 du point d'ancrage de la partie centrale 12 et le deuxième groupe de capteurs 56 étant placé à une distance D2 du point d'ancrage de la partie centrale 12.

Selon un premier exemple, l'appareil de mesure 40 comporte une unité de mesure 50 comportant au moins deux circuits de mesure séparés.

Selon un deuxième exemple, l'appareil de mesure 40 comporte deux unités de mesure 50 comportant chacune un circuit de mesure. Les deux unités de mesure 50 sont placées à des emplacements différents de la face de la partie centrale 12.

L'utilisation de plusieurs circuits de mesure en contact avec une même face du bras permet de réaliser une mesure différentielle des contraintes subies par le bras 4. Par exemple, l'utilisation de deux circuits de mesure permet à l'appareil 40 de déterminer la différence de moment fléchissant subi par le bras 4 entre les deux circuits de mesure. La sensibilité de l'appareil de mesure 40 est alors proportionnelle à la différence entre les distances D1 et D2.

Avantageusement, l'unité de mesure 50 peut comporter un capteur de température 58 placé au voisinage d'au moins un des capteurs de déformation 56.

Par exemple, le capteur de température 58 comporte un thermocouple ou une thermistance, telle qu'une sonde à coefficient de température négatif.

Les données de température mesurées par le capteur 58 permettent notamment de corriger les déformations mesurées par les capteurs 56 pour tenir compte d'une éventuelle dérive due à des températures élevées, par exemple résultant d'un échauffement du dispositif 2.

Les données de températures mesurées par le capteur 58 peuvent aussi être utilisées pour détecter un échauffement anormal du dispositif 2, ou encore pour fournir une indication sur le courant électrique qui traverse le bras 4.

En variante, le capteur de température 58 peut être omis.

Selon des modes de mise en oeuvre avantageux, la structure d'isolement électrique comporte en outre une couche d'encapsulation 60, en résine ou en vernis électriquement isolant, qui recouvre les capteurs de déformation 56 et, le cas échéant, qui recouvre aussi les pistes conductrices associées.

Par exemple, la couche d'encapsulation 60 est déposée sur la couche de céramique 54, de préférence uniquement sur la partie de la surface de la couche de céramique 54 sur laquelle se trouvent les capteurs de déformation 56. Autrement dit, la couche d'encapsulation 60 recouvre partiellement la couche de céramique 54.

Avantageusement, la structure d'isolement électrique comporte également une couche supplémentaire de protection 62 en matériau élastomère électriquement isolant, par exemple en silicone, qui recouvre la couche d'encapsulation 60 et/ou la couche de céramique 54.

Selon des modes de mise en oeuvre optionnels, l'unité de mesure 50 comporte un boîtier 64 monté sur la surface de réception et qui délimite un volume intérieur à l'intérieur duquel sont logés les capteurs 56 et la structure d'isolement.

A titre d'exemple, l'unité de mesure 50 assure ici un niveau d'étanchéité supérieur ou égal à l'indice de protection IP66, par exemple grâce au boîtier 64 et/ou à la couche supplémentaire de protection 62.

Par exemple, le boîtier 64 présente une forme de pavé creux délimité par des parois planes, bien que d'autres formes soient envisageables, telle une forme bombée ou arrondie. La hauteur h64 du boîtier 64 est ici inférieure ou égale à 10cm ou à 1cm et, de préférence, inférieure ou égale à 5mm.

Selon des exemples, le boîtier 64 comporte, sur sa base, une portion de fixation 66 en forme de bride, qui permet de fixer le boîtier 64 à la surface de réception (en l'occurrence, ici, à la partie centrale 12) au moyen d'organes de fixation 68 tels que des vis ou des rivets. En variante, le boîtier 64 peut être fixé par collage ou par soudage, et sans forcément avoir besoin de la portion de fixation 66.

A titre d'exemple illustratif, l'épaisseur e52 de la couche de colle 52 est comprise entre 10µm et 1mm.

A titre d'exemple illustratif, l'épaisseur e54 de la couche de céramique 54 est comprise entre 0,05mm et 3mm, de préférence entre 0,1mm et 0,5mm, de préférence encore entre 0,2mm et 0,4mm.

A titre d'exemple illustratif, l'épaisseur e60 de la couche d'encapsulation est comprise entre 5µm et 0.5mm, de préférence entre 20µm et 100µm.

A titre d'exemple illustratif, l'épaisseur e62 de la couche supplémentaire de protection 62, ici mesurée par rapport à la surface supérieure de la couche d'encapsulation 60, est comprise entre 0,5mm et 1cm, de préférence comprise entre 1mm et 5mm.

Selon des modes de mise en oeuvre, chacune de la colle formant la couche 52 et de la céramique formant la couche 54 a une rigidité diélectrique supérieure ou égale à 10kV par mm. La résine ou le vernis formant la couche d'encapsulation 60 présente une rigidité diélectrique supérieure ou égale à 100kV par mm.

Selon des exemples, l'appareil de mesure 40 permet également l'interconnexion des capteurs 56 à un circuit de traitement installé à bord du véhicule ferroviaire.

Par exemple, chaque unité 50 comporte un ou plusieurs plots de contact 70 électriquement conducteurs ménagés sur la couche de résine 54. Les plots 70 sont par exemple connectés aux capteurs 56 par l'intermédiaire des pistes conductrices précédemment décrites. Chaque plot 70 est raccordé, par l'intermédiaire d'une soudure 72, à un câble 74 qui sort ici du boîtier 64 vers le circuit d'interconnexion.

De préférence, chaque câble 74 comporte une gaine électriquement isolante, par exemple en polymère, notamment en PTFE, présentant une surépaisseur par rapport au rayon du coeur du câble d'au moins 0,5mm.

Dans l'exemple illustré, le plot 70, la soudure 72 et une partie du câble 74 sont recouverts par la couche d'encapsulation 60.

Selon des modes de mise en oeuvre avantageux, les capteurs 56 et la structure d'isolement de chaque unité 50 sont fabriqués directement sur la surface de réception, lors d'un même procédé, par dépôt successif de couches minces, par exemple au moyen d'un procédé de dépôt sous vide.

Par exemple, la première couche 52 est déposée sur la surface de réception, de préférence après un nettoyage de cette dernière. Les autres couches sont ensuite déposées successivement. Les capteurs 56 sont de préférence formés par dépôt de métal sur la couche 54. Par exemple, les capteurs de température 58 sont également formés par dépôt de métal.

La géométrie des couches déposées peut être définie à l'aide de masques pendant le dépôt et/ou à l'aide de procédés de gravure, telle qu'une gravure chimique ou une gravure par faisceau d'ions. De telles méthodes peuvent également être employées pour impartir un motif prédéfini aux couches déposées, par exemple pour définir un motif de manière à réaliser les capteurs 56.

Le cas échéant, les pistes conductrices et les plots 70 sont fabriqués par la même occasion à l'aide de procédés similaires. La soudure 72 est par exemple réalisée ultérieurement, de même que la pose et la fixation du boîtier 64.

Le procédé de fabrication peut également comporter une ou plusieurs étapes de traitement thermique, notamment pour structurer une ou plusieurs des couches déposées, par exemple pour durcir la couche de colle 52 après son dépôt lorsque la colle est un adhésif thermodurcissable.

Grâce aux modes de réalisation de l'invention, l'appareil de mesure 40 permet de mesurer en temps réel les efforts mécaniques subis par le bras 4. La structure d'isolement permet aux capteurs de déformation 56 d'être en contact avec le bras 4, tout en étant électriquement isolés du bras 4.

En particulier, l'appareil de mesure 40 permet une mesure fiable, puisque les capteurs 56 sont placés au plus près du bras 4, sans pour autant accroître le risque de fuite du courant électrique lorsque le courant collecté circule dans le bras entre le patin 6 et le circuit 10.

La structure d'isolement évite d'avoir recours à un circuit d'isolation galvanique en sortie des capteurs 56, ce qui est avantageux car l'ajout d'un tel circuit d'isolation galvanique renchérirait le coût et la complexité du dispositif 2.

La structure d'isolement, et notamment les couches 52 et 54, sont ici suffisamment fines pour permettre aux capteurs 56 de mesurer la déformation du bras, tout en assurant une isolation électrique satisfaisante des capteurs 56 par rapport au bras électriquement conducteur 4, même lorsque ce dernier transporte le courant électrique collecté depuis le rail d'alimentation.

Par exemple, la structure d'isolement permet d'assurer un niveau d'isolement électrique conforme à la norme CEI 60077 lorsque la tension électrique d'alimentation du rail d'alimentation extérieur est égale à 750 V cc.

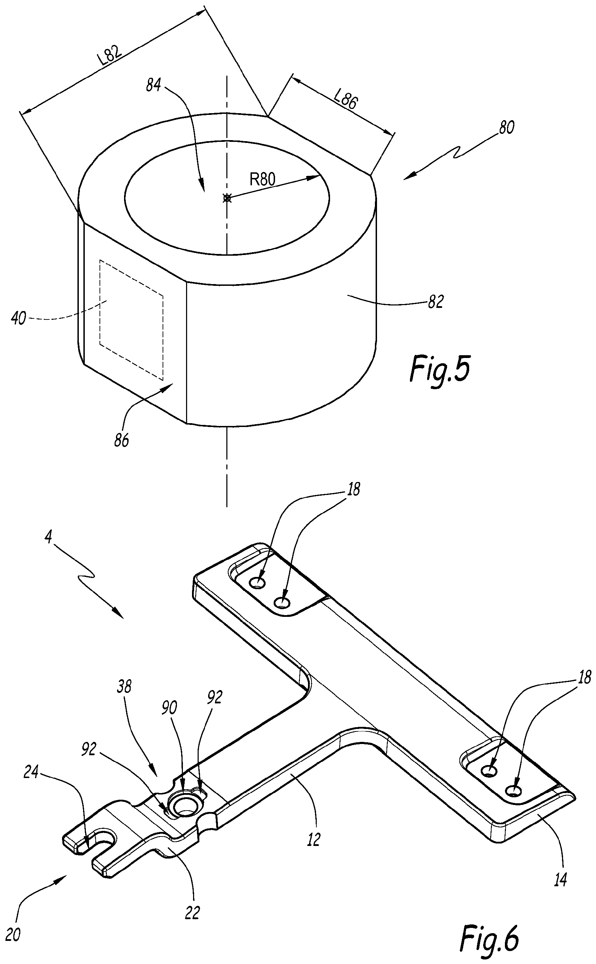

La figure 5 représente une rondelle 80 conforme à un troisième mode de réalisation de l'invention du dispositif de captage. Dans ce mode de réalisation, les capteurs de déformation 56 de l'appareil de mesure 40 sont disposés sur une surface de réception formée par une face extérieure de la rondelle 80.

Dans l'exemple illustré, la rondelle 80 comporte un corps creux 82 essentiellement cylindrique qui délimite un orifice central 84. Le corps 82 comporte une ou plusieurs portions planes 86 ménagées sur la face périphérique extérieure du corps 82. La rondelle 80 comporte ici deux faces 86 opposées l'une à l'autre.

La référence R80 désigne le rayon intérieur de l'orifice central 84. La référence L82 désigne la distance entre les deux faces 86. La référence L86 désigne la largeur d'une face 86.

A titre d'exemple illustratif, le rayon R80 est compris entre 10mm et 20mm. La distance L82 est supérieure ou égale à 10mm et inférieure ou égale à 5cm. La largeur L86 est supérieure ou égale à 5mm et inférieure ou égale à 5cm ou à 2cm.

Dans une configuration montée du dispositif 2, la rondelle 80 est au moins en partie reçue dans l'orifice de réception 38 et fait donc ici partie du bras 4.

La figure 6 représente une vue de dessous du bras 4 (ou du bras 4').

Selon des modes de mise en oeuvre, l'orifice de réception 38 comporte une zone de réception 90 agencée pour recevoir une extrémité de la rondelle 80. Par exemple, la zone de réception 90 comporte un chambrage, ou chanfrein, ménagé autour d'une base de l'orifice de réception 38 sur une face inférieure de la partie 12.

Selon des exemples, l'orifice de réception 38 comporte un trou de passage dimensionné pour permettre le passage du pion de centrage, et la zone de réception 90 présente un diamètre plus élevé que le diamètre du trou de passage, pour accueillir au moins une partie de la rondelle 80 dans la zone de réception 90 lorsque la rondelle 80 est montée autour du pion de centrage.

En pratique, la hauteur de la rondelle 80 est supérieure à la profondeur de la zone de réception 90, de sorte que la rondelle 80 dépasse de l'orifice de réception 38, en faisant saillie par rapport à la face inférieure de la partie centrale 12.

Ainsi, le contact entre le bras 4 et le support de bras 36 est assuré par l'intermédiaire de la rondelle 80.

Par exemple, les faces extérieures 82 et 86 de la rondelle 80 sont au moins partiellement en contact avec des faces radiales de la zone de réception 90.

On comprend donc que, dans une configuration assemblée, la rondelle 80 est montée en compression entre la partie centrale du bras 12 et le support de bras 36. L'extrémité supérieure de la rondelle 80 est en contact une face de fond de la zone de réception 90 et l'extrémité inférieure de la rondelle 80 est en contact avec le support de bras 36. Le pion de centrage est reçu dans l'orifice central 84 de la rondelle 80 et dans le trou de passage de l'orifice de réception 38.

Avantageusement, la zone de réception 90 comporte des logements 92 pour permettre le passage du câble 74. Par exemple, les logements 92 sont chacun formés par un élargissement radial du chambrage. Les logements 92 sont de préférence formés chacun en regard d'un emplacement d'une face 86.

En d'autres termes, dans ce mode de réalisation, l'appareil de mesure 40 est intégré à la rondelle 80 qui est elle-même intégrée au bras 4.

Mis à part cette différence, tout ce qui a été décrit précédemment concernant le dispositif 2 et son fonctionnement, concernant l'appareil de mesure 40 et l'unité de mesure 50, s'applique à la rondelle 80 et peut être transposé au présent mode de réalisation, de sorte que ces détails ne sont pas décrits à nouveau. Notamment, une ou plusieurs unités de mesure 50 peut (peuvent) être formée(s) sur la face 86 au lieu d'être formée sur les faces 26 ou 28 de la partie centrale 12 du bras 4.

L'utilisation de la rondelle 80 permet de mesurer plus précisément les efforts en compression exercés sur le bras, puisque la rondelle 80 est située à proximité du point d'ancrage du bras 4 avec l'armature 8.

La rondelle 80 permet aussi de ne pas avoir à remplacer l'appareil de mesure 40 en cas de casse du bras 4, puisque l'appareil de mesure 40 est placé sur la rondelle 80 et que la rondelle 80 peut être extraite du reste du bras 4.

En variante, les différents modes de réalisation peuvent être combinés entre eux, par exemple en utilisant une rondelle 80 comportant un appareil de mesure 40 conjointement avec un appareil de mesure 40 formé sur une face du bras 4 ou 4' comme précédemment décrit.

Selon encore d'autres variantes non illustrées, l'appareil de mesure peut être intégré dans un dispositif de captage de courant 2 adapté pour fonctionner selon un mode de captage latéral.

Par exemple, le dispositif comporte une armature, un bras et un patin jouant le même rôle que ceux précédemment décrits, le patin ayant sa face de contact tournée latéralement vers un rail d'alimentation monté latéralement, par exemple avec la face de contact s'étendant verticalement. Le bras est par exemple conformé de telle sorte que la partie centrale comporte un ou plusieurs leviers articulés avec l'armature et le patin et, le cas échéant, articulés entre eux.

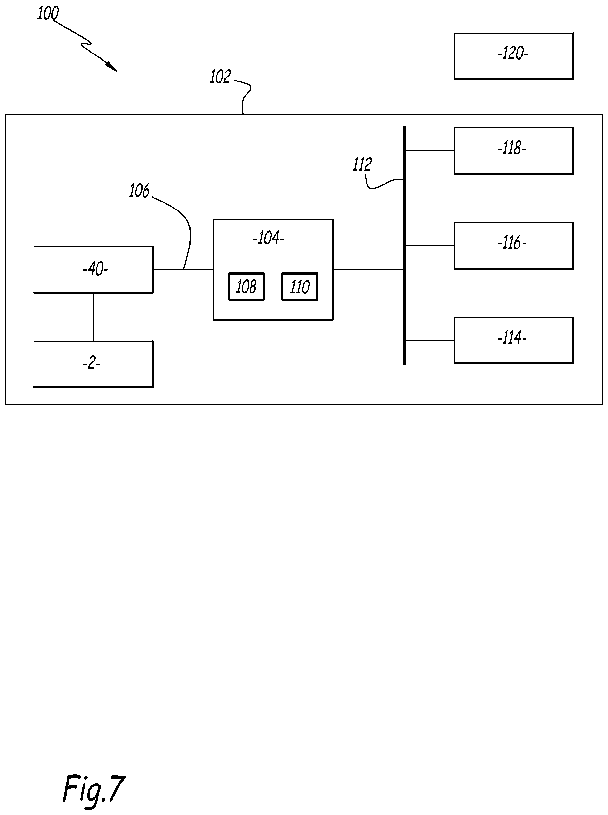

La figure 7 représente un système 100 de captage de courant instrumenté installé dans un véhicule ferroviaire 102.

Le système 100 comporte au moins un dispositif de captage 2 incluant un appareil de mesure 40 selon l'un des modes de réalisation décrits précédemment.

Le système 100 comporte également un dispositif électronique de commande 104 connecté à l'appareil de mesure 40 par une première liaison de données 106.

Par exemple, le dispositif électronique de commande 104 comporte une unité logique de calcul 108, ici un microprocesseur ou un microcontrôleur ou un processeur de traitement du signal (DSP), et une mémoire informatique 110 dans laquelle sont stockées, sous forme de code logiciel, des instructions exécutables pour mettre en oeuvre automatiquement un procédé selon l'un quelconque des exemples décrits ci-dessous. En variante, le dispositif électronique de commande 104 comporte un circuit intégré dédié programmé pour mettre en oeuvre un ou plusieurs desdits procédés.

Le système 100 comporte en outre une deuxième liaison de données 112, une interface homme-machine 114 autorisant une interaction avec un conducteur du véhicule 102, un ordinateur de bord 116 du véhicule 102 et une interface de télécommunication 118 adapté pour communiquer, de préférence par une liaison sans fil, avec un centre de supervision 120 extérieur au véhicule 102.

Par exemple, le système 100 comporte une unité de traitement, non illustrée, pour conditionner les signaux de mesure issus des capteurs 56, par exemple pour les filtrer et/ou pour les échantillonner, avant leur traitement par le dispositif de commande 104.

Selon des exemples, la première liaison 106 est une liaison filaire connectée à l'appareil de mesure 40, par exemple par l'intermédiaire du câble 74. La liaison filaire peut comporter un ou plusieurs câbles dédiés ou une liaison câblée multiplexée. En variante, il peut s'agir d'une liaison sans fil, par exemple une liaison radiofréquence, de préférence une liaison sans fil à courte portée.

La deuxième liaison 112 connecte le dispositif de commande 104 à l'interface 114 et à l'ordinateur 116 et à l'interface 118. Par exemple, la deuxième liaison 112 est un bus de données filaire, tel qu'un bus de terrain, par exemple de type CAN.

Selon des modes de mise en oeuvre, la deuxième liaison 112 et/ou l'interface 114 et/ou l'ordinateur 116 et/ou l'interface 118 peuvent être des équipements déjà présents dans le véhicule 102 et qui sont utilisés partiellement par le système 100 tout en étant partagés avec d'autres fonctions du véhicule 102 indépendantes du système 100.

A titre d'exemples illustratifs, l'interface 114 comporte un écran d'affichage électronique et/ou un indicateur lumineux et/ou un indicateur sonore et/ou un indicateur haptique adapté pour transmettre un message ou une indication à destination du conducteur du véhicule 102. L'ordinateur 116 est un ordinateur de maintenance ferroviaire de type TCMS (pour « Train Control and Management System » en langue anglaise). L'interface 118 comporte une antenne radiofréquence.

Selon un exemple, le dispositif 104 est programmé pour calculer automatiquement la force de contact entre le patin 6 et le rail d'alimentation électrique en fonction des données de déformation mesurées par les capteurs 56.

Ce calcul de la force de contact est par exemple réalisé à l'aide d'une formule prédéfinie en fonction de la configuration géométrique du bras 4 et de la position de l'appareil de mesure 40 dans le dispositif 2, cette formule étant programmée ou enregistrée dans le dispositif 104 Selon un exemple, le dispositif 104 est programmé pour déterminer automatiquement l'état du bras 4 et notamment détecter une rupture du bras 4, par exemple lorsque l'effort mesuré par les capteurs 56 dépasse une valeur seuil prédéterminée, ou lorsque la force de contact mesurée dépasse un premier seuil prédéfini. Par exemple, le premier seuil correspond à un effort transversal supérieur ou égal à 1000N.

Selon un autre exemple, le dispositif 104 est programmé pour mesurer les efforts subis par le bras au cours du temps. Cette mesure peut être mise en oeuvre régulièrement ou à des instants prédéfinis. Les résultats de la mesure sont par exemple stockés dans l'ordinateur 116, par exemple dans un fichier de journalisation, et/ou envoyés à destination du centre de maintenance 120 par l'intermédiaire de l'interface 118.

Ainsi, en sortie, le dispositif 104 est programmé pour fournir, par exemple en temps réel ou périodiquement au cours du temps, une information sur l'état du bras 4 et une information sur la valeur de la force de contact patin/rail.

Avantageusement, lorsque le capteur de température 58 est utilisé, le dispositif 104 est également programmé pour corriger automatiquement les données mesurées par les capteurs 56 en fonction de la température mesurée. La température mesurée par le capteur 58 peut également être fournie en sortie par le dispositif 104 indépendamment des corrections effectuées.

Selon des exemples, le dispositif 104 ou l'ordinateur 116 est programmé pour envoyer une alerte vers l'interface 114 lorsqu'une rupture du bras 4 est détectée par le dispositif 104 grâce aux mesures de l'appareil 40.

Ainsi, en réponse, le conducteur du véhicule 102 peut arrêter immédiatement le véhicule, afin d'éviter tout endommagement du véhicule ou de l'infrastructure ferroviaire.

Selon un autre exemple, le dispositif 104 ou l'ordinateur 116 est programmé pour enregistrer un état anormal du bras détecté par le dispositif 104 grâces aux mesures de l'appareil 40, tel qu'un endommagement anormal du bras, par exemple lorsque l'effort mesuré dépasse une deuxième valeur seuil prédéterminée tout en restant inférieur à la première valeur seuil.

Par exemple, un message informant de cet évènement est automatiquement envoyé à destination du centre de maintenance 120, par l'intermédiaire de l'interface 118. L'évènement correspondant peut également être stocké dans un fichier de journalisation enregistré dans une mémoire de l'ordinateur 116. Un avertissement peut également être affiché sur l'interface 114.

## Revendications

1. Dispositif de captage (2) de courant électrique pour un véhicule ferroviaire, le dispositif de captage comportant :
- un patin (6) destiné à venir en contact avec un rail d'alimentation électrique ;
- une armature (8) ;
- un bras (4) électriquement conducteur qui relie mécaniquement et électriquement l'armature (8) au patin (6), le bras comportant une partie centrale (12) reliant l'armature à une portion de support (14) sur laquelle est monté le patin (6) ;
**caractérisé en ce que** le dispositif de captage (2) comporte un appareil (40) pour mesurer les efforts mécaniques exercés sur le bras (4), l'appareil de mesure comportant des capteurs de déformation (56) intégrés à l'intérieur d'une structure d'isolement électrique pour les isoler électriquement du bras, la structure d'isolement comportant une couche de colle (52) déposée sur une surface de réception (26 ; 28 ; 86) et une couche de céramique (54) surmontant la couche de colle, les capteurs de déformation étant déposés sur la couche de céramique.

2. Dispositif selon la revendication 1, **caractérisé en ce que** l'appareil de mesure (40) est monté sur une face supérieure (26) de la partie centrale du bras.

3. Dispositif selon la revendication 1, **caractérisé en ce que** l'appareil de mesure (40) est monté sur une face latérale (28) de la partie centrale du bras.

4. Dispositif selon la revendication 2 ou 3, **caractérisé en ce que** l'appareil de mesure comporte deux groupes de capteurs de déformation (56), chaque groupe de capteurs étant associé à un circuit de mesure, les deux groupes de capteurs étant montés sur la même face de la partie centrale et placés à des distances différentes de l'armature.

5. Dispositif selon la revendication 1, **caractérisé en ce que** l'armature (8) comporte un support de bras (36), **en ce que** la partie centrale (12) du bras (4) comporte un orifice (38) de réception d'un pion de centrage monté sur un support de bras (36), et **en ce que** le bras (4) comporte en outre une rondelle (80) au moins partiellement reçue dans l'orifice (38) en étant montée autour du pion de centrage et en compression entre la partie centrale du bras (12) et le support de bras (36), de sorte que le bras (4) repose sur le support de bras (36) par l'intermédiaire de la rondelle (80), l'appareil de mesure étant monté sur une surface de réception (86) extérieure de la rondelle .

6. Dispositif selon l'une quelconque des revendications précédentes, **caractérisé en ce que** l'appareil de mesure comporte également un capteur de température (58) placé au voisinage d'au moins un des capteurs de déformation.

7. Dispositif selon l'une quelconque des revendications précédentes, **caractérisé en ce que** la structure d'isolement comporte en outre une couche d'encapsulation (60) en résine ou en vernis qui recouvre les capteurs de déformation (56).

8. Dispositif selon l'une quelconque des revendications précédentes, **caractérisé en ce que** l'épaisseur (e52) de la couche de colle (52) est comprise entre 10µm et 1mm.

9. Dispositif selon l'une quelconque des revendications précédentes, **caractérisé en ce que** l'épaisseur (e54) de la couche de céramique (54) est comprise entre 0,05mm et 3mm.

10. Système de captage de courant (100) pour un véhicule ferroviaire (102), **caractérisé en ce que** le système (100) comporte un dispositif de captage (2) de courant électrique conforme à l'une quelconque des revendications 1 à 9 et une unité de traitement (104) connectée à l'appareil de mesure (40) et programmée pour détecter une rupture du bras (4) et/ou pour calculer une force de contact entre le patin (6) et un rail d'alimentation électrique à partir des mesures de déformation issues de l'appareil de mesure (40).

## Patentansprüche

1. Vorrichtung zur Erfassung (2) eines elektrischen Stromes für ein Schienenfahrzeug, umfassend
- einen Schuh (6), der ausgelegt ist, um mit einer Schiene zur elektrischen Versorgung in Kontakt zu kommen,
- eine Armatur (8);
- einen elektrisch leitenden Arm (4), der mechanisch und elektrisch die Armatur (8) mit dem Schuh (6) verbindet, wobei der Arm einen zentralen Teil (12) umfasst, der die Armatur mit einem Stützabschnitt (14) verbindet, auf dem der Schuh (6) montiert ist;
**dadurch gekennzeichnet, dass** die Vorrichtung zur Erfassung (2) ein Gerät (40) umfasst, um die mechanischen Kräfte zu messen, die auf den Arm (4) ausgeübt werden, wobei das Messgerät Verformungssensoren (56) umfasst, die in das Innere einer Struktur zur elektrischen Isolierung integriert sind, um sie elektrisch vom Arm zu isolieren, wobei die Struktur zur Isolierung eine Klebeschicht (52) umfasst, die auf einer Aufnahmefläche (26; 28; 86) aufgebracht ist, und eine Keramikschicht (54), die die Klebeschicht überragt, wobei die Verformungssensoren auf der Keramikschicht aufgebracht sind.

2. Vorrichtung nach Anspruch 1, **dadurch gekennzeichnet, dass** das Messgerät (40) auf einer oberen Fläche (26) des zentralen Teils des Arms montiert ist.

3. Vorrichtung nach Anspruch 1, **dadurch gekennzeichnet, dass** das Messgerät (40) auf einer seitlichen Fläche (28) des zentralen Teils des Arms montiert ist.

4. Vorrichtung nach Anspruch 2 oder 3, **dadurch gekennzeichnet, dass** das Messgerät zwei Gruppen von Verformungssensoren (56) umfasst, wobei jede Gruppe von Sensoren einem Messkreis zugewiesen ist, wobei die zwei Gruppen von Sensoren auf der gleichen Fläche des zentralen Teils montiert sind in verschiedenen Abständen von der Armatur platziert sind.

5. Vorrichtung nach Anspruch 1, **dadurch gekennzeichnet, dass** die Armatur (8) eine Armstütze (36) umfasst, dadurch, dass der zentrale Teil (12) des Arms (4) eine Öffnung (38) zur Aufnahme eines Zentrierstifts umfasst, der auf einer Armstütze (36) montiert ist, und dadurch, dass der Arm (4) außerdem eine Unterlegscheibe (80) umfasst, die mindestens teilweise in der Öffnung (38) aufgenommen ist, indem sie um den Zentrierstift montiert und in Kompression zwischen dem zentralen Teil des Arms (12) und der Armstütze (36) ist, so dass der Arm (4) auf der Armstütze (36) mit Hilfe der Unterlegscheibe (80) aufliegt, wobei das Messgerät auf einer Äußeren Aufnahmefläche (86) der Unterlegscheibe montiert ist.

6. Vorrichtung nach einem der vorhergehenden Ansprüche, **dadurch gekennzeichnet, dass** das Messgerät auch einen Temperatursensor (58) umfasst, der in der Nähe mindestens eines der Verformungssensoren platziert ist.

7. Vorrichtung nach einem der vorhergehenden Ansprüche, **dadurch gekennzeichnet, dass** die Struktur zur Isolierung außerdem eine Einkapselungsschicht (60) aus Harz oder Lack umfasst, die die Verformungssensoren (56) bedeckt.

8. Vorrichtung nach einem der vorhergehenden Ansprüche, **dadurch gekennzeichnet, dass** die Dicke (e52) der Klebstoffschicht (52) im Bereich zwischen 10 µm und 1 mm liegt.

9. Vorrichtung nach einem der vorhergehenden Ansprüche, **dadurch gekennzeichnet, dass** die Dicke (e54) der Keramikschicht (54) im Bereich zwischen 0,05 mm und 3 mm liegt.

10. System zur Erfassung eines Stromes (100) für ein Schienenfahrzeug (102), **dadurch gekennzeichnet, dass** das System (100) eine Vorrichtung zur Erfassung (2) eines elektrischen Stromes nach einem der Ansprüche 1 bis 9 und eine Verarbeitungseinheit (104) umfasst, die mit dem Messgerät (40) verbunden und programmiert ist, um einen Bruch des Arms (4) nachzuweisen und/oder um eine Kontaktkraft zwischen dem Schuh (6) und einer Schiene zur elektrischen Versorgung ausgehend von Verformungsmessungen zu berechnen, die aus dem Messgerät (40) stammen.

## Claims

1. A device (2) for capturing an electric current for a rail vehicle, the capture device including:
- a pad (6) intended to come into contact with an electric power rail;
- a frame (8);
- an electrically conductive arm (4) which mechanically and electrically connects the frame (8) to the pad (6), the arm including a central part (12) coupling the frame to a support portion (14) on which the pad (6) is mounted;
**characterized in that** the capture device (2) includes an apparatus (40) for measuring the mechanical forces exerted on the arm (4), the measuring apparatus including strain sensors (56) which are integrated on the inside of an electrical isolation structure, such that said strain sensors can be electrically insulated from the arm, the isolation structure including a glue layer (52) deposited on a receiving surface (26; 28; 86) and a ceramic layer (54) covering the glue layer, the strain sensors being arranged on the ceramic layer.

2. The device according to claim 1, **characterized in that** the measuring apparatus (40) is mounted on an upper face (26) of the central part of the arm.

3. The device according to claim 1, **characterized in that** the measuring apparatus (40) is mounted on a side face (28) of the central part of the arm.

4. The device according to claim 2 or 3, **characterized in that** the measuring apparatus includes two groups of strain sensors (56), each group of sensors being associated with a measuring circuit, the two groups of sensors being mounted on the same face of the central part and placed at different distances from the frame.

5. The device according to claim 1, **characterized in that** the frame (8) includes an arm support (36), **in that** the central part (12) of the arm (4) includes an orifice (38) for receiving a centering pin mounted on an arm support (36), and **in that** the arm (4) further includes a washer (80) which is at least partially received in the orifice (38) while being mounted around the centering pin and compressed between the central part of the arm (12) and the arm support (36), such that the arm (4) rests on the arm support (36) by means of the washer (80), the measuring apparatus being mounted on an outer receiving surface (86) of the washer.

6. The device according to any one of the preceding claims, **characterized in that** the measuring apparatus also includes a temperature sensor (58) placed near at least one of the strain sensors.

7. The device according to any one of the preceding claims, **characterized in that** the isolation structure further includes an encapsulating layer (60) made from resin or varnish which covers the strain sensors (56).

8. The device according to any one of the preceding claims, **characterized in that** the thickness (e52) of the glue layer (52) is between 10 µm and 1 mm.

9. The device according to any one of the preceding claims, **characterized in that** the thickness (e54) of the ceramic layer (54) is between 0.05 mm and 3 mm.

10. A current capture system (100) for a rail vehicle (102), **characterized in that** the system (100) includes a device (2) for capturing electric current according to any one of claims 1 to 9 and a processing unit (104) connected to the measuring apparatus (40) and programmed to detect a break of the arm (4) and/or to calculate a contact force between the pad (6) and an electric power rail from strain measurements coming from the measuring apparatus (40).
